# EUROPEAN PATENT APPLICATION

(11) **EP 4 817 782 A1**
(43) Date of publication of application: **07.10.2026**
(21) Application number: 24930359.5
(22) Date of filing: 02.09.2024
(51) Int. Cl.: B23K 26/362

(54) **CODE ENGRAVING APPARATUS, CODE ENGRAVING METHOD, AND METHOD FOR CODE ENGRAVING ERROR PREVENTION**

(30) Priority: 22.03.2024 CN 202410330686
(71) Applicant: Contemporary Amperex Technology Co., Limited, Ningde, Fujian 352100 (CN)
(72) Inventor: WANG, Tengteng, Ningde, Fujian 352100 (CN); YU, Xinglu, Ningde, Fujian 352100 (CN); QUE, Tianxiang, Ningde, Fujian 352100 (CN)
(74) Representative: Ziebig Hengelhaupt Intellectual Property Attorneys Patentanwaltskanzlei PartGmbB
(86) International application number: PCT/CN2024/116264
(87) International publication number: WO 2025/194697

(57) **Abstract**

The present disclosure discloses a code engraving apparatus, a code engraving method, and a method for code engraving error prevention. The code engraving apparatus comprises a feeding mechanism, which comprises at least two feeding fixtures and at least two linear guide rails that extend in a first direction and are arranged in parallel in a second direction, each feeding fixture being capable of linearly reciprocating between a first position and a second position along respective linear guide rails, and the first direction being perpendicular to the second direction; a code engraving mechanism, which is located between the first position and the second position in the first direction, the at least two feeding fixtures that are loaded with workpieces to be code-engraved being capable of alternatingly passing through a code engraving area of the code engraving mechanism; a code scanning mechanism, which is located on a downstream side of the code engraving mechanism in the first direction and is used for scanning a code on a code-engraved workpiece on a feeding fixture that has moved into a code scanning area of the code scanning mechanism; and a material picking mechanism, which is used for picking up a scanned workpiece on a feeding fixture. The code engraving mechanism and the code scanning mechanism are both located on the same side of the feeding mechanism in the second direction.

## Description

### CROSS-REFERENCE TO RELATED APPLICATIONS

The disclosure is based on and claims priority to Chinese patent application No. 202410330686.4, entitled "CODE MARKING APPARATUS, CODE MARKING METHOD, AND CODE MARKING ERROR-PROOFING METHOD", filed on March 22, 2024, the disclosure of which is hereby incorporated by reference in its entirety.

### TECHNICAL FIELD

The present disclosure relates to the technical field of battery manufacturing, and in particular, to a code marking apparatus, a code marking method, and a code marking error-proofing method.

### BACKGROUND

New energy batteries are being increasingly widely applied in daily life and industry. For example, new energy vehicles equipped with batteries have been widely used. Additionally, batteries are also being increasingly applied in fields such as energy storage.

In the production and manufacturing process of batteries, for the purpose of traceability and management, a code needs to be marked on a workpiece such as the top cover of each cell (battery cell), so that each cell bears a scannable marking for identification. After code marking is completed, the marked code further needs to be verified. How to efficiently implement the above steps using an apparatus is one of the research topics in the industry.

### SUMMARY

To address the foregoing technical problem, the present disclosure provides a code marking apparatus, a code marking method, and a code marking error-proofing method with high operational efficiency, so that the steps of clamping a workpiece, marking a code, scanning the code, and discharging the workpiece can be cyclically performed, which is convenient, fast, time-saving, and labor-saving.

The present disclosure is implemented by the following technical solutions.

According to a first aspect, the present disclosure provides a code marking apparatus, including: a feeding mechanism, including at least two feeding clamps and at least two linear guide rails that extend in a first direction and are disposed in parallel in a second direction, where the feeding clamps are capable of linearly reciprocating between a first position and a second position along the respective linear guide rails, and the first direction is perpendicular to the second direction; a code marking mechanism, located between the first position and the second position in the first direction, and configured to mark a workpiece to be marked that has moved onto the feeding clamp in a code marking region of the code marking mechanism, where the at least two feeding clamps that are loaded with workpieces to be marked are capable of alternately passing through the code marking region of the code marking mechanism; a code scanning mechanism, located on a downstream side of the code marking mechanism in the first direction, and configured to scan the marked workpiece on the feeding clamp that has moved into a code scanning region of the code scanning mechanism; and a pick-up mechanism, configured to pick up the scanned workpiece on the feeding clamp, where the code marking mechanism and the code scanning mechanism are both located on a same side of the feeding mechanism in the second direction.

In embodiments of the present disclosure, because each of the feeding clamps moves along a respective linear guide rail, the feeding clamps are independent of each other and may respectively move, to implement that the workpieces held by the feeding clamps are alternately marked, which helps to implement automatic cyclical execution of a series of actions of feeding, code marking, code scanning, and picking-up, and further helps to improve the takt time of a production line. Since at least two feeding clamps are provided and the feeding clamps alternately pass through the code marking mechanism, at least two workpieces can undergo different operations simultaneously while only one workpiece is being marked with a code. In particular, the at least two workpieces to be marked undergo code marking alternately, so that not only the risk of repetitive marked codes on different workpieces can be mitigated but also operational efficiency can be enhanced. Furthermore, when one feeding clamp is damaged or under repair, the remaining feeding clamps can still implement complete operations, thereby helping to reduce the impact of downtime caused by damage or repair of the feeding clamp on production takt, production efficiency, and the like. Because the pick-up mechanism that can pick up scanned workpieces on the feeding clamps and the feeding clamps can reciprocate, the feeding clamps can be emptied by the pick-up mechanism to allow for the placement of new workpieces to be marked, thereby achieving automatic cyclic operations. The feeding mechanism, the code marking mechanism, and the code scanning mechanism are all arranged between the first position and the second position, thereby helping to simplify and shorten a transfer route, and further helping to reduce the footprint of the apparatus. Because the code scanning mechanism and the code marking mechanism are located on the same side in the second direction, the feeding clamp can hold a workpiece with the surface to be marked of the workpiece facing the code marking mechanism. After the workpiece is marked and moves to the code scanning mechanism, the marked surface of the workpiece also faces the code scanning mechanism without the need to flip the workpiece, thereby simplifying the structure and operation steps of the feeding clamp.

In some embodiments, the feeding mechanism further includes at least two clamp drive components, configured to drive the respective feeding clamps to move along the linear guide rails.

Because the feeding mechanism further includes the clamp drive components that drive the feeding clamps to move, the feeding clamps can move automatically under the action of the clamp drive components, thereby helping to automate the operation and reduce manual labor. Because the clamp drive components and the feeding clamps are disposed in a one-to-one correspondence, it is convenient to control and adjust the movement of each feeding clamp.

In some embodiments, each feeding clamp includes a workpiece placement slot, positions of the workpiece placement slots of the feeding clamps in a third direction are different, and the third direction is perpendicular to the first direction and the second direction; and the code scanning mechanism includes a code scanning bracket and at least two groups of code scanning guns disposed on the code scanning bracket, and the groups of code scanning guns have different positions in the third direction, and are configured to respectively scan the marked workpieces in the workpiece placement slots at respective corresponding positions.

Since the feeding clamp includes the workpiece placement slot, the workpiece can be stably positioned within the slot while maintaining the desired orientation of the marking surface. As the positions of the workpiece placement slots in the third direction are different, the groups of code scanning guns correspond one-to-one to the workpiece placement slots. Therefore, the groups of code scanning guns can perform code scanning relatively independently, thereby enabling code scanning of workpieces in the feeding clamps without mutual interference, which is conducive to accelerating the production takt. Workpieces with different code scanning requirements can be further placed in the workpiece placement slots corresponding to different positions, thereby meeting the code scanning requirements. In addition, code scanning can further be simultaneously performed on at least two marked workpieces.

In some embodiments, each feeding clamp further includes a clamp bracket and a clamping plate disposed on the clamp bracket, the clamp brackets are slidably connected to the respective linear guide rails, and the clamping plates form the workpiece placement slots.

Since the clamping plate is formed with the workpiece placement slot, the workpiece can be locked by the workpiece placement slot, and is therefore stably fixed on the clamping plate. Since the clamping plate is disposed on the clamp bracket and the clamp bracket is slidably connected to the linear guide rail, the workpiece can slide along the linear guide rail together with the clamp bracket.

In some embodiments, each group of code scanning guns includes a first code scanning gun and a second code scanning gun arranged in the first direction, configured to respectively scan a first identification code on the marked workpiece and a second identification code marked by the code marking mechanism.

Therefore, the scanning of the first identification code and the second identification code can be performed simultaneously. Compared with separate code scanning, the steps are further simplified, and time is saved, thereby enhancing production efficiency. Additionally, the identity information of the workpiece can be identified through the first identification code to reduce the risk of workpiece errors. Whether the correct identification code has been accurately marked can be verified by scanning the second identification code.

In some embodiments, the code marking apparatus further includes: a scrap bin, located on a side of the code scanning mechanism away from the feeding mechanism in the second direction, and configured to receive a scanning-rejected workpiece picked up by the pick-up mechanism.

Since the code marking apparatus further includes the scrap bin, scanning-rejected workpieces can be collected in the scrap bin for subsequent processing.

In some embodiments, the code marking apparatus further includes: a flipping mechanism, where the scrap bin and the flipping mechanism are respectively located on two opposite sides of the feeding mechanism in the second direction, and the flipping mechanism is configured to receive a scanning-accepted workpiece picked up by the pick-up mechanism and flip the scanning-accepted workpiece.

Since the scrap bin and the flipping mechanism are respectively located on two opposite sides of the feeding mechanism in the second direction, the classification of scanning-accepted workpieces and scanning-rejected workpieces is achieved by controlling the pick-up mechanism to clamp and move workpieces toward the scrap bin or the flipping mechanism. Moreover, this can reduce interference with movement paths of the scanning-accepted workpieces and the scanning-rejected workpieces. As the flipping mechanism is configured to receive the scanning-accepted workpieces picked up by the pick-up mechanism, the marked surface of the scanning-accepted workpieces can be flipped from one side facing the code marking mechanism in the second direction to other orientations, thereby facilitating subsequent steps such as picking-up and movement.

In some embodiments, the flipping mechanism includes a flipping bracket, a flipping clamp rotatably disposed on the flipping bracket, and a flipping drive component connected to the flipping clamp, the flipping clamp is configured to fix the scanning-accepted workpiece, and the flipping drive component is configured to drive the flipping clamp to rotate relative to the flipping bracket to flip the scanning-accepted workpiece.

Therefore, the scanning-accepted workpiece can be fixed by the flipping clamp and then flipped along with the flipping clamp, thereby avoiding the occurrence of dropping or shifting of the scanning-accepted workpiece during the flipping process. The scanning-accepted workpiece can be automatically flipped under the action of the flipping drive component, which helps to achieve automation of operations and reduces manual labor.

In some embodiments, the pick-up mechanism is located on a side of the feeding mechanism in the first direction; and the pick-up mechanism includes a pick-up component movable in the second direction and the third direction, the third direction is perpendicular to the first direction and the second direction, and the pick-up component is configured to pick up the scanned workpiece, transfer the scanned workpiece that is rejected to the scrap bin, and transfer the accepted scanned workpiece that is accepted to the flipping mechanism.

Since the pick-up mechanism includes the pick-up component movable in the second direction and the scrap bin and the flipping mechanism are respectively located on two opposite sides of the feeding mechanism in the second direction, the pick-up mechanism may transfer the scanned workpiece to the scrap bin or the flipping mechanism, thereby achieving the classification of scanning-accepted workpieces and scanning-rejected workpieces. Since the pick-up component can further move along the third direction, the pick-up component can pull the workpiece out of the feeding clamp and insert the workpiece into the scrap bin and the flipping mechanism, thereby achieving fully automated operations and reducing manual labor.

In some embodiments, the pick-up mechanism further includes a first pick-up guide rail extendable in the second direction, a pick-up bracket slidably connected to the first pick-up guide rail, and a second pick-up guide rail extendable in the third direction and disposed on the pick-up bracket; and the pick-up component includes a pick-up drive component and a pick-up gripper disposed on the pick-up drive component, and the pick-up drive component is slidably connected to the second pick-up guide rail and is configured to drive the pick-up gripper to clamp or release the workpiece.

Since the first pick-up guide rail extends along the second direction and the pick-up bracket is slidably connected to the first pick-up guide rail, the pick-up bracket is movable in the second direction. Since the pick-up bracket is provided with the second pick-up guide rail extending along the third direction and the pick-up drive component is slidably connected to the second pick-up guide rail, the pick-up drive component is movable in both the second direction and the third direction. Since the pick-up gripper is disposed on the pick-up drive component, the workpiece can be gripped and moved along the second direction and the third direction to another mechanism, and placed on the another mechanism.

In some embodiments, the code marking apparatus further includes: an unloading mechanism, where the unloading mechanism is located on a side of the flipping mechanism away from the feeding mechanism in the second direction; and the unloading mechanism includes an unloading component movable in the second direction and the third direction, the third direction is perpendicular to the first direction and the second direction, and the unloading component is configured to pick up the flipped workpiece and transfer the flipped workpiece to a next station.

Since the unloading component is movable in the third direction, the unloading component can pull the workpiece from the flipping mechanism, thereby freeing up space on the flipping mechanism to accommodate the next workpiece, which facilitates continuous operations of code marking on workpieces. Since the unloading component is movable in the second direction and the unloading component is positioned on the side of the flipping mechanism away from the feeding mechanism in the second direction, the unloading component can transfer the picked-up workpiece away from the flipping mechanism until the workpiece is transferred to the next station before returning to continue with picking up to enable cyclic operations, thereby improving operational efficiency, benefiting continuous production, and saving time and effort.

In some embodiments, the unloading mechanism further includes a first unloading guide rail extending along the second direction, an unloading bracket slidably connected to the first unloading guide rail, and a second unloading guide rail extending along the third direction and disposed on the unloading bracket; and the unloading component includes an unloading drive component and an unloading gripper disposed on the unloading drive component, and the unloading drive component is slidably connected to the second unloading guide rail and is configured to drive the unloading gripper to grip or release the flipped workpiece.

Since the first unloading guide rail extends along the second direction and the unloading bracket is slidably connected to the first unloading guide rail, the unloading bracket is movable in the second direction. Since the unloading bracket is provided with the second unloading guide rail extending along the third direction and the unloading drive component is slidably connected to the second unloading guide rail, the unloading drive component is movable in both the second direction and the third direction. Since the unloading gripper is disposed on the unloading drive component, the workpiece can be gripped and moved along the second direction or the third direction, and is then placed at the next station.

According to a second aspect, the present disclosure further provides a code marking method, applied to the code marking apparatus described above, and including: a feeding step: linearly moving, by a feeding clamp of a feeding mechanism carrying a workpiece to be marked, along a first direction from a first position to a second position; a code marking step: when the feeding clamp carrying the workpiece to be marked moves along the first direction into a code marking region of a code marking mechanism, performing, by the code marking mechanism, a code marking operation on the workpiece to be marked; a code scanning step: when the feeding clamp carrying the marked workpiece moves along the first direction into a code scanning region of a code scanning mechanism, scanning, by the code scanning mechanism, the marked workpiece, where the code marking mechanism and the code scanning mechanism are both located on a same side of the feeding mechanism in a second direction, and the second direction is perpendicular to the first direction; and a pick-up step: picking up, by a pick-up mechanism, the scanned workpiece on the feeding clamp, where in the feeding step, at least two feeding clamps carrying respective workpieces to be marked alternately pass through the code marking region of the code marking mechanism.

In this way, the workpiece to be marked is sequentially moved to the code marking region and the code scanning region by the feeding clamp, and code marking and code scanning of the workpiece are completed. The scanned workpiece is then picked up by the pick-up mechanism, so that the feeding clamp can accommodate a new workpiece to be marked, thereby facilitating continuous production. The code marking method has simple steps and is time-saving and labor-saving. The code marking mechanism can record only one identification code at a time, and each workpiece requires a different code. Therefore, workpieces to be marked alternately pass through the code marking region, so that the code marking mechanism can mark codes on the workpieces to be marked separately, thereby avoiding repeated code marking.

In some embodiments, the feeding step includes: returning, by each unloaded feeding clamp, from the second position to the first position to perform loading.

In this way, loading is performed in the first position, the code marking and the code scanning are completed in the process of moving to the second position, the workpiece in the second position is removed, and the feeding clamp that becomes unloaded again returns to the first position. The steps of code marking, code scanning, and workpiece removal during loading and movement, thereby achieving continuous production and improving production efficiency.

In some embodiments, the pick-up step includes: if the scanned workpiece is rejected, transferring, by the pick-up mechanism, the picked-up scanned workpiece that is rejected to a scrap bin provided in the code marking apparatus, or if the scanned workpiece is accepted, transferring, by the pick-up mechanism, the picked-up scanned workpiece that is accepted to a flipping mechanism provided in the code marking apparatus.

Therefore, the pick-up mechanism can classify scanning-accepted workpieces and scanning-rejected workpieces, and send scanning-accepted workpieces to the flipping mechanism and scanning-rejected workpieces to the scrap bin, thereby facilitating subsequent separate processing.

In some embodiments, the code marking method further includes: an unloading step: picking up, by an unloading mechanism of the code marking apparatus, the flipped workpiece on the flipping mechanism, and transferring the flipped workpiece to a next station.

Therefore, the unloading mechanism picks up the workpiece that has been flipped to a position that meets the requirements of the next station, and the unloading mechanism no longer needs to flip the workpiece. After the unloading mechanism picks up the workpiece, the flipping mechanism frees up a position to accommodate a new workpiece, thereby facilitating production continuity.

According to a third aspect, the present disclosure further provides a code marking error-proofing method, including: receiving code marking input information; determining whether the code marking input information is sendable code marking information, sending code marking output information to a code marking mechanism if the code marking input information is sendable code marking information, or skipping sending code marking output information to a code marking mechanism and issuing an alarm prompt if the code marking input information is non-sendable code marking information, where the sendable code marking information includes a first code marking character, the code marking output information includes a second code marking character converted from the first code marking character, and the first code marking character and the second code marking character are different and correspond to each other; and performing, by the code marking mechanism, a code marking operation on a workpiece based on the received code marking output information.

Through evaluation of the input information, only sendable code marking information is sent to the code marking mechanism. This reduces the probability of code marking errors caused by mistakes in manually input information, thereby minimizing losses caused by such errors. For non-sendable code marking information, the alarm prompt is issued to remind input personnel to correct the input information in time, thereby ensuring that the marking operations can start in a timely manner. Through conversion into the second code marking character corresponding to the first code marking character, characters in the final marked code are in a uniform format, thereby facilitating subsequent review and management.

In some embodiments, the sending code marking output information to a code marking mechanism if the code marking input information is sendable code marking information includes: converting the first code marking character into the second code marking character corresponding to the first code marking character if the code marking input information is the first code marking character, and sending the second code marking character as the code marking output information to the code marking mechanism.

Therefore, it is determined, by determining that the code marking input information is the first code marking character, that the code marking input information is sendable code marking information, thereby reducing the risk of incorrect code marking due to an incorrect first code marking character input by the input personnel. Furthermore, through conversion into the second code marking character corresponding to the first code marking character, characters in the final marked code are in a uniform format, thereby facilitating subsequent review and management.

In some embodiments, the first code marking character includes a lowercase letter, and the second code marking character includes an uppercase letter corresponding to the lowercase letter.

Therefore, lowercase letters in the code marking input information can be converted into corresponding uppercase letters, thereby ensuring that only uppercase letters appear in the code marking output information. Input personnel only need to focus on the accuracy of the content without needing to worry about the format, thereby reducing input burden of the input personnel.

In some embodiments, the method further includes: receiving workpiece code marking information sent by a code scanning mechanism, determining whether a code marking direction of the workpiece code marking information is correct, and if the code marking direction is not correct, issuing an alarm prompt.

Therefore, the code marking direction of the code marking information is verified, thereby avoiding discrepancies in code marking directions.

In some embodiments, the method further includes: recording the code marking output information sent each time; and using the code marking output information recorded each time as the non-sendable code marking information.

Therefore, each workpiece has a unique marked code, thereby facilitating subsequent tracing and management.

The above description only refers to an overview of the technical solutions of the present disclosure. In order to understand the technical means of the present disclosure more clearly such that it can be implemented according to the content of the specification, and to make the above-mentioned and other purposes, features, and advantages of the present disclosure more apparent, specific embodiments of the present disclosure are listed below.

### BRIEF DESCRIPTION OF THE DRAWINGS

Various other advantages and benefits will become apparent to those of ordinary skill in the art upon reading the following detailed description of the preferred embodiments. The accompanying drawings are used for describing the preferred embodiments, but should not be considered as a limitation to the present disclosure. In addition, in all the accompanying drawings, same parts are indicated by the same reference numerals. In the accompanying drawings:
FIG. 1 is a three-dimensional schematic diagram of a code marking apparatus according to some embodiments of the present disclosure;
FIG. 2 is a three-dimensional schematic diagram of a code marking apparatus with two feeding clamps according to some embodiments of the present disclosure;
FIG. 3 is a three-dimensional schematic diagram of a code marking apparatus with an unloading mechanism according to some embodiments of the present disclosure;
FIG. 4 is a three-dimensional schematic diagram of FIG. 3 according to the present disclosure from another perspective;
FIG. 5 is a side view of a feeding mechanism according to some embodiments of the present disclosure;
FIG. 6 is a front view of a code marking apparatus according to some embodiments of the present disclosure;
FIG. 7 is a side view of a code marking apparatus according to some embodiments of the present disclosure;
FIG. 8 is a schematic flowchart of a code marking method according to some embodiments of the present disclosure;
FIG. 9 is a schematic flowchart of an example of a feeding step according to some embodiments of the present disclosure;
FIG. 10 is a schematic flowchart of an example of a pick-up step according to some embodiments of the present disclosure;
FIG. 11 is a schematic flowchart of a code marking error-proofing method according to some embodiments of the present disclosure;
FIG. 12 is a schematic diagram of a code marking character error-proofing method according to some embodiments of the present disclosure; and
FIG. 13 is a schematic diagram of a workpiece code marking direction error-proofing method according to some embodiments of the present disclosure.

### Descriptions of reference numerals:

10. feeding mechanism; 101. feeding clamp; 1011. clamp bracket; 1012. clamping plate; 102. linear guide rail; 103. clamp drive component; 11. code marking mechanism; 12. code scanning mechanism; 121. code scanning bracket; 122. code scanning gun; 13. pick-up mechanism; 131. pick-up component; 132. first pick-up guide rail; 133. pick-up bracket; 134. second pick-up guide rail; 14. scrap bin; 141. bin housing; 142. pull-out drawer; 15. flipping mechanism; 151. flipping bracket; 152. flipping clamp; 16. unloading mechanism; 161. unloading component; 162. first unloading guide rail; 163. unloading bracket; 164. second unloading guide rail; X. first direction; Y. second direction; Z. third direction.

### DETAILED DESCRIPTION

The following describes embodiments of technical solutions of the present disclosure in detail with reference to the accompanying drawings. The following embodiments are only used for illustrating the technical solutions of the present disclosure more explicitly, and are thus only interpreted as examples, rather than used to limit the scope of protection of the present disclosure.

Unless defined otherwise, all technical and scientific terms used herein have the same meaning as commonly understood by those skilled in the technical filed to which the present disclosure belongs. The terminology used herein is for the purpose of describing particular embodiments only and is not intended to limit the present disclosure. The terms "comprising" and "having" and any variations thereof in the present disclosure are intended to cover non-exclusive inclusions.

In the description according to the embodiments of the present disclosure, the technical terms "first", "second", "third", and the like are only used to distinguish different objects, and should not be understood as indicating or implying relative importance or implying the number, specific order or primary and secondary relationship of indicated technical features. In the description according to the embodiments of the present disclosure, the technical terms "first", "second", and the like are only used to distinguish different objects, and should not be understood as indicating or implying relative importance or implying the number, specific order or primary and secondary relationship of indicated technical features.

Reference herein to "an embodiment" means that a particular feature, structure, or characteristic described in connection with the embodiment may be included in at least one embodiment of the present disclosure. Embodiments where this phrase occurs at various locations of the specification do not necessarily refer to the same embodiments, and are not independent or alternative embodiments mutually exclusive to one another. It shall be explicitly and implicitly understood by persons skilled in the art that the embodiments described herein may be combined with other embodiments.

In the description of embodiments of the present disclosure, the term "and/or" is merely an association to describe the associated objects. It can mean that there are three kinds of relationships, such as A and/or B, which means that A exists alone, A and B exist at the same time, and B exists alone. In addition, the character "/" in this specification generally indicates an "or" relationship between contextually associated objects.

In the description according to the embodiments of the present disclosure, the directions or positional relationships indicated by the technical terms such as "length", "width", "thickness", "upper", "lower", "front", "rear", "left", "right", "vertical", "horizontal", "top", "bottom", "inside", "outside", and "axial" are only for the convenience of describing embodiments of the present disclosure and simplifying the description, rather than indicating or implying that the involved apparatus or element should have a specific orientation or should be configured, operated, or used in the specific orientation, therefore, they cannot be understood as limiting embodiments of the present disclosure.

In the description according to the embodiments of the present disclosure, unless otherwise expressly specified and defined, the technical terms "installed", "connected to", "connected with", "fixed", or the like should be interpreted in a broad sense. For example, a connection may refer to a fixed connection, a disassembly connection or an integral connection; or may refer to a mechanical connection or an electrical connector; or may refer to a direct connection or an indirect connection through an intermediate medium; or may refer to an internal communication between the two elements or the interaction relationship between the two elements. For those of ordinary skill in the art, the specific meanings of the above terms in embodiments of the present disclosure may be interpreted according to specific situations.

In the description of the embodiments of the present disclosure, unless otherwise expressly specified and limited, the technical term "contact" should be broadly understood, and may be a direct contact, or may be a contact through an intermediate media layer, or may be a contact with substantially no interaction force between two entities in contact, or may be a contact with an interaction force between the two in contact.

The present disclosure is described below in detail.

New energy batteries are being increasingly widely applied in daily life and industry. For example, new energy vehicles equipped with batteries have been widely used. Additionally, batteries are also being increasingly applied in fields such as energy storage.

In the production and manufacturing process of batteries, for the purpose of traceability and management, a code needs to be marked on a workpiece such as the top cover of each cell (or battery cell), so that each cell bears a scannable marking for identification. After code marking is completed, the marked code further needs to be verified. How to implement the above steps using an apparatus is one of the research topics in the industry.

The present disclosure intends to develop a code marking apparatus that can cyclically perform the steps of clamping a workpiece, marking a code, scanning the code, and discharging the workpiece, which is convenient, fast, time-saving, and labor-saving.

Based on such a design concept, the inventors of the present disclosure design a code marking apparatus. The code marking apparatus includes: a feeding mechanism, including at least two feeding clamps and at least two linear guide rails that extend in a first direction and are disposed in parallel in a second direction, where the feeding clamps are capable of linearly reciprocating between a first position and a second position along the respective linear guide rails, and the first direction is perpendicular to the second direction; a code marking mechanism, located between the first position and the second position in the first direction, and configured to mark a workpiece to be marked that has moved onto the feeding clamp in a code marking region of the code marking mechanism, where the at least two feeding clamps that are loaded with workpieces to be marked are capable of alternately passing through the code marking region of the code marking mechanism; a code scanning mechanism, located on a downstream side of the code marking mechanism in the first direction, and configured to scan the marked workpiece on the feeding clamp that has moved into a code scanning region of the code scanning mechanism; and a pick-up mechanism, configured to pick up the scanned workpiece on the feeding clamp, where the code marking mechanism and the code scanning mechanism are both located on a same side of the feeding mechanism in the second direction.

In embodiments of the present disclosure, because each of the feeding clamps moves along a respective linear guide rail, the feeding clamps are independent of each other and may respectively move, to implement that the workpieces held by the feeding clamps are alternately marked, which helps to implement automatic cyclical execution of a series of actions of feeding, code marking, code scanning, and picking-up, and further helps to improve the takt time of a production line. Since at least two feeding clamps are provided and the feeding clamps alternately pass through the code marking mechanism, at least two workpieces can undergo different operations simultaneously while only one workpiece is being marked with a code. In particular, the at least two workpieces to be marked undergo code marking alternately, so that not only the risk of repetitive marked codes on different workpieces can be mitigated but also operational efficiency can be enhanced. Furthermore, when one feeding clamp is damaged or under repair, the remaining feeding clamps can still implement complete operations, thereby helping to reduce the impact of downtime caused by damage or repair of the feeding clamp on production takt, production efficiency, and the like. Because the pick-up mechanism that can pick up scanned workpieces on the feeding clamps and the feeding clamps can reciprocate, the feeding clamps can be emptied by the pick-up mechanism to allow for the placement of new workpieces to be marked, thereby achieving automatic cyclic operations. The feeding mechanism, the code marking mechanism, and the code scanning mechanism are all arranged between the first position and the second position, thereby helping to simplify and shorten a transfer route, and further helping to reduce the footprint of the apparatus. Because the code scanning mechanism and the code marking mechanism are located on the same side in the second direction, the feeding clamp can hold a workpiece with the surface to be marked of the workpiece facing the code marking mechanism. After the workpiece is marked and moves to the code scanning mechanism, the marked surface of the workpiece also faces the code scanning mechanism without the need to flip the workpiece, thereby simplifying the structure and operation steps of the feeding clamp.

The workpiece may be the top cover of a cell (battery cell) or a housing structure that constitutes a battery or a cell (battery cell). Certainly, persons skilled in the art should understand that the code marking apparatus provided in embodiments of the present disclosure is not only used for code marking in a battery production and manufacturing process, but can also be used for code marking of other workpieces that require code marking.

In embodiments of the present disclosure, the battery may include one or more battery cell assemblies, configured to supply voltage and capacity. The battery cell assembly may include a plurality of battery cells. The plurality of battery cells are connected in series, in parallel, or in series-parallel through a bus component.

In some embodiments, the battery cell assembly is usually formed by arranging a plurality of battery cells.

For example, the battery cell assembly may be a battery module. The battery module includes a plurality of battery cells that are arranged and fixedly form an independent module. For example, the battery module may be formed by tying the plurality of battery cells through a strap.

In some embodiments, the battery may be a battery pack, and the battery pack includes a box body and one or more battery cell assemblies. The battery cell assemblies are accommodated in the box body.

For example, the battery cell assembly may be a battery module. The battery cell assembly may be accommodated in the box body by fixing the battery module in the box body.

The battery cell assembly may alternatively be accommodated in the box body by directly fixing the plurality of battery cells in the box body.

For example, the box body may include a first box body and a second box body. The first box body and the second box body are snapped to form a sealed space inside the box body to accommodate the battery cell assembly. The "sealed" means "covered" or "closed", or may be hermetic, or may be non-hermetic. The first box body may be a top cover or a bottom plate.

For example, the box body may include a top cover, a frame, and a bottom plate. The top cover and the bottom plate are connected to the frame to form a sealed space inside the box body to accommodate the battery cell assembly.

In some embodiments, the box body may be used as a part of the chassis structure of a vehicle. For example, a part of the box body may serve as at least a part of the floor of a vehicle, or a part of the box body may serve as at least a part of the cross beam and longitudinal beam of a vehicle.

The batteries in embodiments of this application are all applicable to various power consuming apparatuses using a battery cell, such as mobile phones, portable devices, laptop computers, electric scooters, electric toys, power tools, vehicles, ships, and spacecraft. For example, the spacecraft include airplanes, rockets, space shuttles, and spaceships.

In embodiments of this application, the battery cell may be a secondary battery. The secondary battery is a battery cell whose active material can be activated for continuous use through charging after the battery cell is discharged. The battery cell may be a lithium-ion battery, a sodium-ion battery, a sodium-lithium-ion battery, a lithium-metal battery, a sodiummetal battery, a lithium-sulfur battery, a magnesium-ion battery, a nickel-hydride battery, a nickel-cadmium battery, a lead storage battery, and the like. This is not limited in embodiments of the present disclosure.

In some embodiments, the battery cell may include a housing. The housing is configured to encapsulate components such as the electrode assembly and the electrolyte. The housing may be a steel housing, an aluminum housing, a plastic housing (for example, polypropylene), a composite metal housing (for example, a copper-aluminum composite housing), an aluminum-plastic film, or the like.

For example, the battery cell may be a cylindrical battery cell, a prismatic battery cell, a soft pack battery cell, or a battery cell of another shape. The prismatic battery cell includes a square-case battery cell, a blade-shaped battery cell, or a multi-prismatic battery. The multi-prismatic battery is, for example, a hexagonal prismatic battery. This is not particularly limited in the present disclosure.

In some embodiments, the housing includes a top cover and a shell. The shell is provided with an opening. The top cover closes the opening to form a closed space used for accommodating materials such as the electrode assembly and the electrolyte. The shell may be provided with one or more openings. One or more top covers may also be provided.

The following description is made with reference to the accompanying drawings.

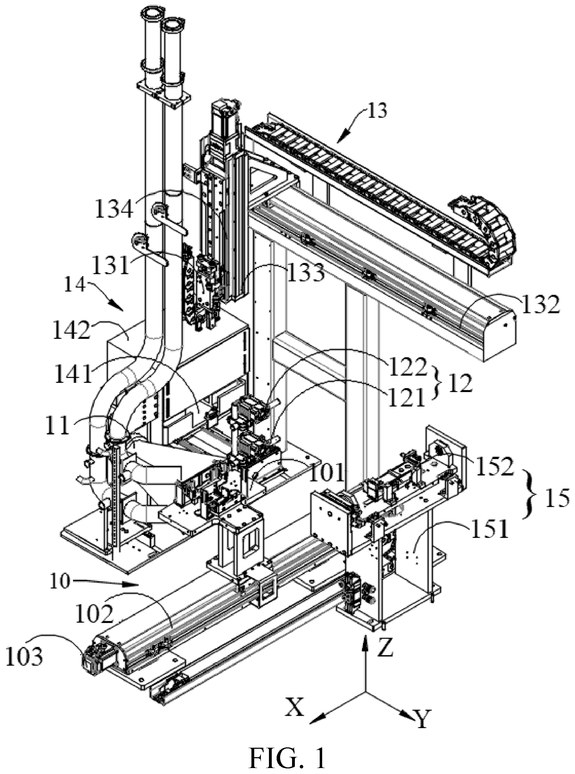

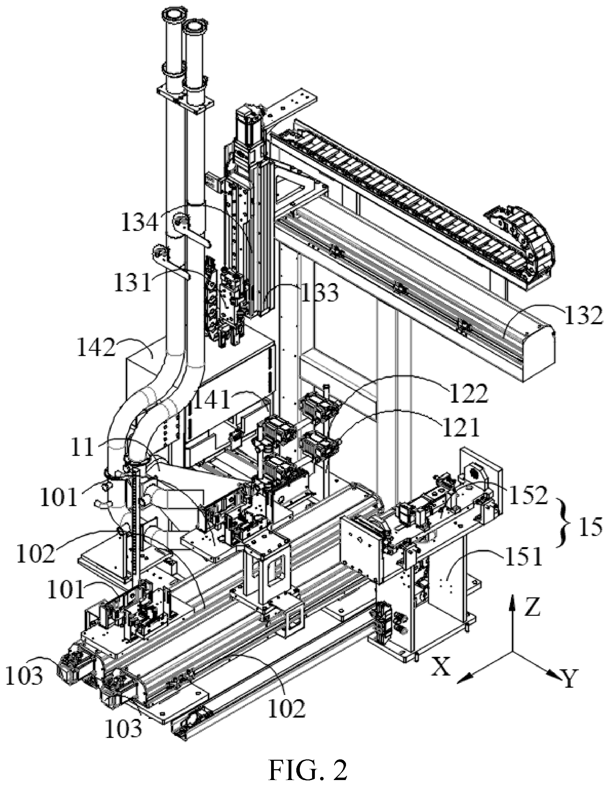

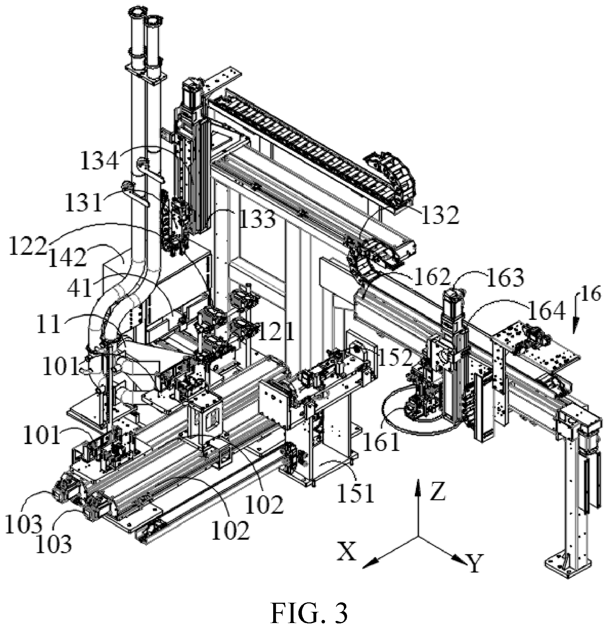

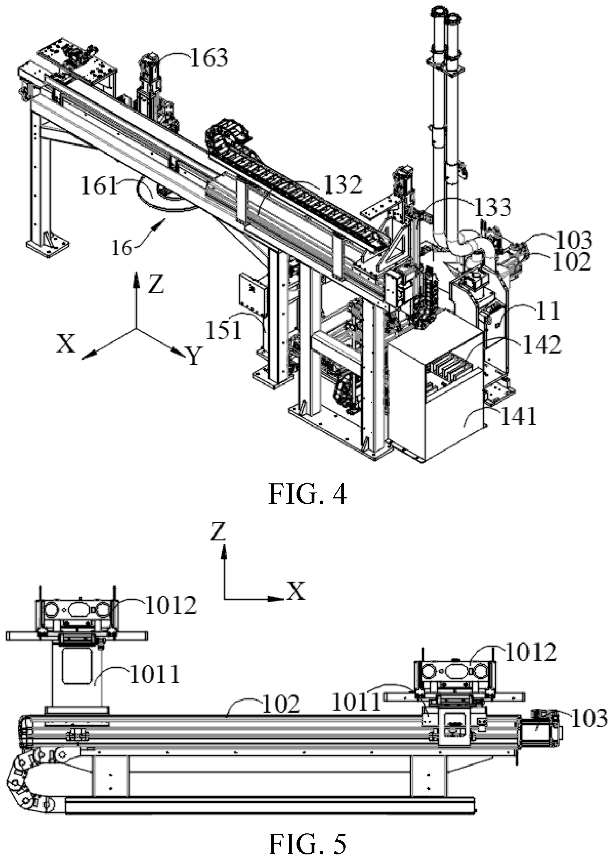

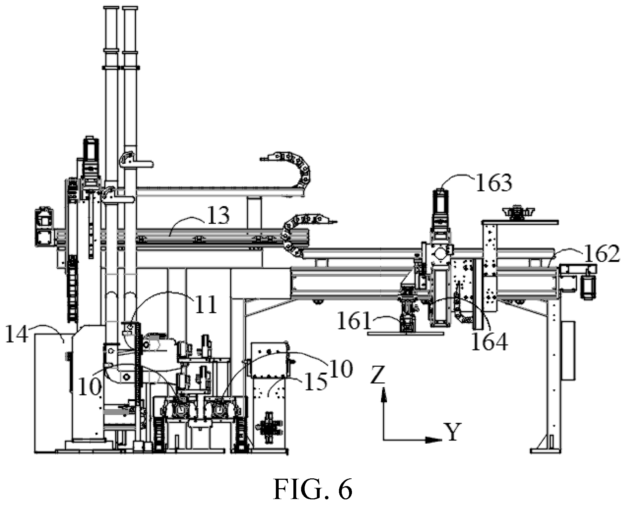

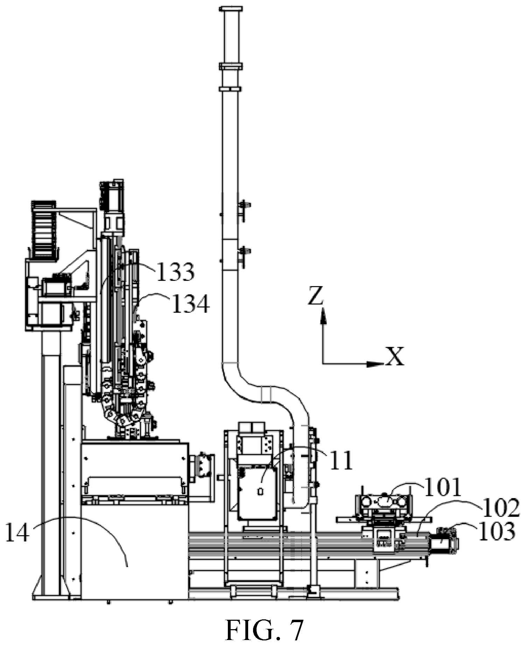

FIG. 1 is a three-dimensional schematic diagram of a code marking apparatus according to some embodiments of the present disclosure. FIG. 2 is a three-dimensional schematic diagram of a code marking apparatus with two feeding clamps according to some embodiments of the present disclosure. FIG. 3 is a three-dimensional schematic diagram of a code marking apparatus with an unloading mechanism according to some embodiments of the present disclosure. FIG. 4 is a three-dimensional schematic diagram of FIG. 3 according to the present disclosure from another perspective. FIG. 5 is a side view of a feeding mechanism according to some embodiments of the present disclosure. FIG. 6 is a front view of a code marking apparatus according to some embodiments of the present disclosure. FIG. 7 is a side view of a code marking apparatus according to some embodiments of the present disclosure.

According to a first aspect, as shown in FIG. 1, the present disclosure provides a code marking apparatus, including: a feeding mechanism 10, including at least two feeding clamps 101 and at least two linear guide rails 102 that extend in a first direction X and are disposed in parallel in a second direction Y, where the feeding clamps 101 are capable of linearly reciprocating between a first position and a second position along the respective linear guide rails 102, and the first direction X is perpendicular to the second direction Y; a code marking mechanism 11, located between the first position and the second position in the first direction X, and configured to mark a workpiece to be marked that has moved onto the feeding clamp 101 in a code marking region of the code marking mechanism 11, where the at least two feeding clamps 101 that are loaded with workpieces to be marked are capable of alternately passing through the code marking region of the code marking mechanism 11; a code scanning mechanism 12, located on a downstream side of the code marking mechanism 11 in the first direction X, and configured to scan the marked workpiece on the feeding clamp 101 that has moved into a code scanning region of the code scanning mechanism 12; and a pick-up mechanism 13, configured to pick up the scanned workpiece on the feeding clamp 101, where the code marking mechanism 11 and the code scanning mechanism 12 are both located on a same side of the feeding mechanism 10 in the second direction Y.

The code marking apparatus includes the feeding mechanism 10, the code marking mechanism 11, the code scanning mechanism 12, and the pick-up mechanism 13. The feeding mechanism 10 extends along the first direction X. The pick-up mechanism 13 is located at an end of the feeding mechanism 10 in the first direction X. An end of the feeding mechanism 10 close to the pick-up mechanism 13 is regarded as the second position, and an end of the feeding mechanism 10 away from the pick-up mechanism 13 is regarded as the first position. The code marking mechanism 11 and the code scanning mechanism 12 are sequentially disposed between the first position and the second position. That is, the code marking mechanism 11 is located on an upstream side of the code scanning mechanism 12, and the code scanning mechanism 12 is located on the downstream side of the code marking mechanism 11. A region in which the code marking mechanism 11 can perform code marking is the code marking region, and a region in which the code scanning mechanism 12 can perform code scanning is the code scanning region. The first position, the code marking region, the code scanning region, and the second position are sequentially provided in the first direction X. In the first direction X, the direction of the first position relative to the second position is the upstream side, and the direction of the second position relative to the first position is the downstream side.

The feeding mechanism 10 can hold or release a workpiece and drive the workpiece to move along the first direction X. Specifically, the feeding mechanism 10 includes the feeding clamp 101. The feeding clamp 101 can hold a workpiece and drive the workpiece to sequentially pass through the code marking region and the code scanning region from the first position to reach the second position, and can also drive the workpiece to sequentially pass through the code scanning region and the code marking region from the second position to return to the first position.

The code marking mechanism 11 can perform code marking on a workpiece to be marked within the code marking region, and the code marking mechanism 11 can mark one type of identification code each time. When the feeding clamp 101 moves the workpiece to be marked into the code marking region, the code marking mechanism 11 can mark the identification code on the workpiece.

The code scanning mechanism 12 can scan and identify the identification code on the workpiece. Each code scanning mechanism 12 can scan and identify one identification code each time. When the feeding clamp 101 moves the marked workpiece to the code scanning region, the code scanning mechanism 12 can scan and identify the identification code marked by the code marking mechanism 11.

The pick-up mechanism 13 can hold or release the workpiece. The pick-up mechanism 13 can pick up the scanned workpiece from the feeding clamp 101 located at the second position, thereby freeing up space on the feeding clamp 101 to clamp a new workpiece. Furthermore, the scanned workpiece on the pick-up mechanism 13 can be transferred out, thereby enabling the pick-up mechanism 13 to continue holding a new scanned workpiece.

During actual use, the feeding clamp 101 of the feeding mechanism 10 holds the workpiece to be marked at the first position, and moves the workpiece to be marked to the code marking region. The code marking mechanism 11 performs code marking on the workpiece. After code marking is completed, the feeding clamp 101 moves the marked workpiece to the code scanning region, and the code scanning mechanism 12 performs code scanning on the workpiece. After code scanning is completed, the feeding clamp 101 moves the scanned workpiece to the second position, and the pick-up mechanism 13 picks up the scanned workpiece. The unloaded feeding clamp 101 passes through the code scanning region and the code marking region from the second position to return to the first position, clamps, at the first position, the workpiece to be marked, and repeats the above steps.

At least two feeding clamps 101 are disposed. The feeding clamps 101 are spaced apart by a distance during movement, so that only one feeding clamp 101 enters the code marking region for code marking each time. Each feeding clamp 101 passes through the code marking region once in a process of moving from the first position to the second position, and passes through the code marking region again in a process of returning from the second position to the first position. When a workpiece on any feeding clamp 101 is being marked in the code marking region, only the feeding clamp 101 being marked can exist in the code marking region. If the code marking mechanism 11 does not perform code marking, a plurality of feeding clamps 101 may exist in the code marking region. To simplify operation steps and improve operational efficiency, the feeding clamps 101 may be spaced apart by a distance and then move in the same movement mode, so that the feeding clamps 101 alternately passes through the code marking mechanism 11.

Optionally, the plurality of feeding clamps 101 are arranged in the first direction X. The feeding clamp 101 located on the upstream side may start to move first. After the feeding clamp 101 has moved a distance, a next feeding clamp 101 located on the downstream side of the feeding clamp 101 starts to move. Each feeding clamp 101 moves at an interval in the first direction X. When the last feeding clamp 101 on the downstream side reaches the second position, all the feeding clamps 101 return to the first position. Alternatively, the plurality of feeding clamps 101 may be arranged at the first position at intervals in the first direction X, and then move together toward the downstream side. All the feeding clamps 101 reach the second position, and then return to the first position together.

Also optionally, the plurality of feeding clamps 101 are arranged in the second direction Y. The plurality of feeding clamps 101 start to move from the first position at different time points. The feeding clamp 101 that reaches the second position first returns to the first position. When reaching the first position, the feeding clamp 101 clamps a new workpiece and then moves to the second position. This cycle is repeated. The second direction Y is perpendicular to the first direction X.

Therefore, at least two workpieces can undergo different operations simultaneously while only one workpiece is being marked with a code. In particular, the at least two workpieces to be marked undergo code marking alternately, so that not only the risk of repetitive marked codes on different workpieces can be mitigated but also operational efficiency can be enhanced. Furthermore, when one feeding clamp 101 is damaged or under repair, the remaining feeding clamps 101 can still implement complete operations, thereby helping to reduce the impact of downtime caused by damage or repair of the feeding clamp 101 on production takt, production efficiency, and the like.

The feeding mechanism 10 includes at least two linear guide rails 102. The plurality of linear guide rails 102 are disposed in parallel in the second direction Y, and each linear guide rail 102 extends along the first direction X. The second direction Y is perpendicular to the first direction X. An end of the linear guide rail 102 away from the pick-up mechanism 13 is the first position, which is an initial position of the feeding clamp 101, and a workpiece is fixed to the feeding clamp 101 in the first position. An end of the linear guide rail 102 near the pick-up mechanism 13 is the second position, and a scanned workpiece is removed from the feeding clamp 101 located in the second position.

Optionally, a quantity of linear guide rails 102 is consistent with a quantity of feeding clamps 101. One feeding clamp 101 is disposed on each linear guide rail 102, and the feeding clamp 101 can move freely on the linear guide rail 102. Also optionally, the quantity of linear guide rails 102 is less than the quantity of feeding clamps 101. At least two feeding clamps 101 are disposed on at least one linear guide rail 102, and the feeding clamps 101 move at a distance from each other in the first direction X. The present disclosure imposes no special limitation on the quantity of linear guide rails 102.

Optionally, positions of each feeding clamp 101 in the second direction Y and the third direction Z are different. At least two feeding clamps 101 may be moved into the code marking region or the code scanning region simultaneously, and each feeding clamp 101 corresponds to a different code marking mechanism 11 or code scanning mechanism 12, so that at least two workpieces undergo code marking or code scanning simultaneously and independently. Alternatively, the feeding clamps 101 may move at a distance from each other, so that only one feeding clamp 101 enters the code marking region or the code scanning region each time, so that the workpiece undergoes code marking or code scanning independently and alternately.

Because each of the feeding clamps 101 moves along a respective linear guide rail 102, the feeding clamps 101 are independent of each other and may respectively move, to implement that the workpieces held by the feeding clamps 101 are alternately marked, which helps to implement automatic cyclical execution of a series of actions of feeding, code marking, code scanning, and picking-up, and further helps to improve the takt time of a production line.

In some embodiments, still referring to FIG. 2, FIG. 3, and FIG. 6, the feeding mechanism 10 further includes at least two clamp drive components 103, configured to drive the respective feeding clamps 101 to move along the linear guide rails 102.

The feeding mechanism 10 further includes a clamp drive component 103, and at least two clamp drive components 103 are disposed. Optionally, the clamp drive components 103 are disposed in a one-to-one correspondence with the feeding clamps 101. Each clamp drive component 103 is connected to one feeding clamp 101, and the feeding clamp 101 is driven to move along the first direction X. Also optionally, one clamp drive component 103 is connected to at least two feeding clamps 101, so that the connected feeding clamps 101 move synchronously. The feeding clamps 101 are spaced apart by a distance in the first direction X. With the distance, when the workpiece requires code marking, only one feeding clamp 101 exists in the code marking region.

The clamp drive component 103 may be a cylinder. A cylinder barrel of the cylinder is disposed at an end of the linear guide rail 102. An end cap movable in the first direction X is connected to the feeding clamp 101, and the feeding clamp 101 is pushed and pulled in the first direction X. The clamp drive component 103 may alternatively be a structural form in which a rolling lead screw and a motor cooperate. A screw rod whose surface is configured with threads extends along the first direction X, an output shaft of the motor is connected to the screw rod, a ball nut is sleeved on the screw rod, and the feeding clamp 101 is connected to the ball nut. The motor drives the screw rod to rotate, and the ball nut drives the feeding clamp 101 to move along the first direction X. The clamp drive component 103 may alternatively be a structural form in which a rack and a motor cooperate. The clamp drive component 103 may be any form or component that satisfies that the feeding clamp 101 reciprocates in the first direction X. The present disclosure imposes no special limitation on a specific form of the clamp drive component 103.

Because the feeding mechanism 10 further includes the clamp drive components 103 that drive the feeding clamps 101 to move, the feeding clamps 101 can move automatically under the action of the clamp drive components 103, thereby helping to automate the operation and reduce manual labor. Because the clamp drive components 103 and the feeding clamps 101 are disposed in a one-to-one correspondence, it is convenient to control and adjust the movement of each feeding clamp 101.

During movement along with the feeding clamp 101, the workpiece first passes through the code marking region of the code marking mechanism 11, and then passes through the code scanning region of the code scanning mechanism 12. In the code marking region, the surface that requires code marking of the workpiece faces the code marking mechanism 11, and the code marking mechanism 11 performs code marking on the workpiece. After the code marking is completed, the marked workpiece is transferred to the code scanning region. In the code scanning region, the marked surface of the workpiece needs to face the code scanning mechanism 12, and the code scanning mechanism 12 performs code scanning on the workpiece.

Specifically, the code marking mechanism 11 includes a code marker. An emission end of the code marker needs to face the surface that requires code marking of the workpiece to perform code marking on the workpiece. The code scanning mechanism 12 includes a code scanning gun 122. An emission end of the code scanning gun 122 needs to face the marked surface of the workpiece to perform code scanning on the workpiece. To simplify operation steps, the emission end of the code scanning gun 122 and the emission end of the code marker may face the same direction, thereby enabling code marking and code scanning without flipping the workpiece.

Optionally, the code marking mechanism 11 and the code scanning mechanism 12 are disposed on the same side of the feeding mechanism 10 in the second direction Y, and the code scanning gun 122 and the code marker may be located on the same side of the feeding mechanism 10 in the second direction Y, or may be located on the same side of the feeding mechanism 10 in the third direction Z. Also optionally, the code marking mechanism 11 and the code scanning mechanism 12 are respectively disposed on two sides of the feeding mechanism 10 in the second direction Y, and the code scanning gun 122 and the code marker are located on the same side of the feeding mechanism 10 in the third direction Z.

The feeding mechanism 10, the code marking mechanism 11, the code scanning mechanism 12, and the pick-up mechanism 13 are all fixed on the ground, the first direction X and the second direction Y are perpendicular to each other and parallel to the ground, and the third direction Z is perpendicular to the ground.

In embodiments of the present disclosure, because each of the feeding clamps 101 moves along a respective linear guide rail 102, the feeding clamps 101 are independent of each other and may respectively move, to implement that the workpieces held by the feeding clamps 101 are alternately marked, which helps to implement automatic cyclical execution of a series of actions of feeding, code marking, code scanning, and picking-up, and further helps to improve the takt time of a production line. Since at least two feeding clamps 101 are provided and the feeding clamps 101 alternately pass through the code marking mechanism 11, at least two workpieces can undergo different operations simultaneously while only one workpiece is being marked with a code. In particular, the at least two workpieces to be marked undergo code marking alternately, so that not only the risk of repetitive marked codes on different workpieces can be mitigated but also operational efficiency can be enhanced. Furthermore, when one feeding clamp 101 is damaged or under repair, the remaining feeding clamps 101 can still implement complete operations, thereby helping to reduce the impact of downtime caused by damage or repair of the feeding clamp 101 on production takt, production efficiency, and the like. Because the pick-up mechanism 13 that can pick up scanned workpieces on the feeding clamps 101 and the feeding clamps 101 can reciprocate, the feeding clamps 101 can be emptied by the pick-up mechanism 13 to allow for the placement of new workpieces to be marked, thereby achieving automatic cyclic operations. The feeding mechanism 10, the code marking mechanism 11, and the code scanning mechanism 12 are all arranged between the first position and the second position, thereby helping to simplify and shorten a transfer route, and further helping to reduce the footprint of the apparatus. Because the code scanning mechanism 12 and the code marking mechanism 11 are located on the same side in the second direction Y, the feeding clamp 101 can hold a workpiece with the surface to be marked of the workpiece facing the code marking mechanism 11. After the workpiece is marked and moves to the code scanning mechanism 12, the marked surface of the workpiece also faces the code scanning mechanism 12 without the need to flip the workpiece, thereby simplifying the structure and operation steps of the feeding clamp 101.

In some embodiments, each feeding clamp 101 includes a workpiece placement slot, positions of the workpiece placement slots of the feeding clamps 101 in a third direction Z are different, and the third direction Z is perpendicular to the first direction X and the second direction Y; and the code scanning mechanism 12 includes a code scanning bracket 121 and at least two groups of code scanning guns 122 disposed on the code scanning bracket 121, and the groups of code scanning guns 122 have different positions in the third direction Z, and are configured to respectively scan the marked workpieces in the workpiece placement slots at respective corresponding positions.

The feeding clamp 101 includes a workpiece placement slot. The workpiece placement slot includes two first surfaces, the first surfaces that are spaced apart from each other in the first direction X, and the workpiece is placed between the two first surfaces. Optionally, the two first surfaces are configured to be movable close to or away from each other, thereby clamping or releasing the workpiece.

Further, the workpiece placement slot further includes a second surface, and the second surface is configured to carry a workpiece. The first surfaces are spaced apart from each other in the first direction X and disposed on the second surface. Optionally, the workpiece placement slot further includes a third surface, and the third surface is perpendicular to the first surface and the second surface, and is configured to limit the workpiece in the second direction Y.

Positions of the workpiece placement slots in the third direction Z are different, that is, the workpiece placement slots are located at different heights relative to the ground. The workpiece placement slots are arranged at different heights in the code marking region, so that all workpieces in the workpiece placement slots can undergo code marking when passing through the code marking region.

The code scanning mechanism 12 includes a code scanning bracket 121 and a code scanning gun 122. The code scanning bracket 121 is configured to support and fix the code scanning gun 122, and an emission end of the code scanning gun 122 faces the feeding mechanism 10. At least two groups of code scanning guns 122 are disposed, and a height of each group of code scanning guns 122 corresponds to a height of one workpiece placement slot.

Since the feeding clamp 101 includes the workpiece placement slot, the workpiece can be stably positioned within the slot while maintaining the desired orientation of the marking surface. As the positions of the workpiece placement slots in the third direction Z are different, the groups of code scanning guns 122 correspond one-to-one to the workpiece placement slots. Therefore, the groups of code scanning guns 122 can perform code scanning relatively independently, thereby enabling code scanning of workpieces in the feeding clamps 101 without mutual interference, which is conducive to accelerating the production takt. Workpieces with different code scanning requirements can be further placed in the workpiece placement slots corresponding to different positions, thereby meeting the code scanning requirements. In addition, code scanning can further be simultaneously performed on at least two marked workpieces. In some embodiments, each feeding clamp 101 further includes a clamp bracket 1011 and a clamping plate 1012 disposed on the clamp bracket 1011, the clamp brackets 1011 are slidably connected to the respective linear guide rails 102, and the clamping plates 1012 form the workpiece placement slots.

In some embodiments, as shown in FIG. 5, each feeding clamp 101 further includes a clamp bracket 1011 and a clamping plate 1012 disposed on the clamp bracket 1011, the clamp brackets 1011 are slidably connected to the respective linear guide rails 102, and the clamping plates 1012 form the workpiece placement slots.

The feeding clamp 101 further includes a clamp bracket 1011 and a clamping plate 1012. One side of the clamp bracket 1011 in the third direction Z is connected to the clamping plate 1012, and the other side of the clamp bracket 1011 in the third direction Z is slidably connected to the linear guide rail 102. The workpiece placement slot is formed on a side of the clamping plate 1012 close to the code marking mechanism 11 in the second direction Y. Heights of the clamp brackets 1011 of the feeding clamps 101 are different from each other, so that positions of the workpiece placement slots formed by the clamping plates 1012 in the third direction Z are different. The height of the clamp bracket 1011 refers to a length of the clamp bracket 1011 in the third direction Z.

Since the clamping plate 1012 is formed with the workpiece placement slot, the workpiece can be locked by the workpiece placement slot, and is therefore stably fixed on the clamping plate 1012. Since the clamping plate 1012 is disposed on the clamp bracket 1011 and the clamp bracket 1011 is slidably connected to the linear guide rail 102, the workpiece can slide along the linear guide rail 102 together with the clamp bracket 1011.

In some embodiments, each group of code scanning guns 122 includes a first code scanning gun and a second code scanning gun arranged in the first direction X, configured to respectively scan a first identification code on the marked workpiece and a second identification code marked by the code marking mechanism 11.

Optionally, each group of code scanning guns 122 includes a second code scanning gun, and the second code scanning gun is configured to scan the second identification code marked by the code marking mechanism 11. Further, each group of code scanning guns 122 further includes a first code scanning gun, and the first code scanning gun is configured to scan the first identification code. The first identification code is an inherent identification code carried of a workpiece, for example, an incoming material code. The first identification code and the second identification code may be associated. After the marked workpiece reaches the code scanning region, the first code scanning gun and the second code scanning gun can respectively scan the first identification code and the second identification code on the workpiece at the same time.

Workpieces from different manufacturers or production batches may have different marking positions for the first identification code. First workpieces having the same marking position of the first identification code may be placed in the same workpiece placement slot each time. In a group of code scanning guns 122 corresponding to the position of the workpiece placement slot, arrangement positions of the first code scanning gun and the second code scanning gun respectively correspond to the first identification code and the second identification code. Another batch of second workpieces having a different marking position from the first identification code of the first workpiece are placed in another workpiece placement slot each time, in a group of code scanning guns 122 corresponding to the position of the workpiece placement slot, arrangement positions of the first code scanning gun and the second code scanning gun respectively correspond to the first identification code and the second identification code.

Therefore, the scanning of the first identification code and the second identification code can be performed simultaneously. Compared with separate code scanning, the steps are further simplified, and time is saved, thereby enhancing production efficiency. Additionally, the identity information of the workpiece can be identified through the first identification code to reduce the risk of workpiece errors. Whether the correct identification code has been accurately marked can be verified by scanning the second identification code.

In some embodiments, as shown in FIG. 1 to FIG. 4, FIG. 6, and FIG. 7, the code marking apparatus further includes: a scrap bin 14, located on a side of the code scanning mechanism 12 away from the feeding mechanism 10 in the second direction Y, and configured to receive a scanning-rejected workpiece picked up by the pick-up mechanism 13.

The code marking apparatus further includes a scrap bin 14. The scrap bin 14 is located on a side of the code scanning mechanism 12 away from the feeding mechanism 10 in the second direction Y. The scrap bin 14 includes a bin housing 141 and a pull-out drawer 142, the bin housing 141 is configured as a casing, and the pull-out drawer 142 is placed within the bin housing 141. An opening is formed in a side surface of the bin housing 141, allowing the pull-out drawer 142 to be pulled out of the bin housing 141 or pushed into the bin housing 141 through the opening. The pull-out drawer 142 is configured as a casing with an opening on a side, and the opening faces a side in the third direction Z. The pick-up mechanism 13 picks up a scanning-rejected workpiece and places the workpiece into the casing through the opening in the casing. Optionally, a limiting element is constructed within the casing to limit the workpiece within the casing.

Since the code marking apparatus further includes the scrap bin 14, scanning-rejected workpieces can be collected in the scrap bin 14 for subsequent processing.

In some embodiments, as shown in FIG. 1 to FIG. 3 and FIG. 6, the code marking apparatus further includes a flipping mechanism 15. The scrap bin 14 and the flipping mechanism 15 are respectively located on two opposite sides of the feeding mechanism 10 in the second direction Y, and the flipping mechanism 15 is configured to receive a scanning-accepted workpiece picked up by the pick-up mechanism 13 and flip the scanning-accepted workpiece.

The code marking apparatus further includes the flipping mechanism 15. The flipping mechanism 15 is located on the side of the feeding mechanism 10 away from the code scanning mechanism 12 in the second direction Y. That is, the scrap bin 14 and the flipping mechanism 15 are located on two sides of the feeding mechanism 10.

During actual use, on the feeding mechanism 10, the surface that requires code marking of the workpiece faces a side closer to the code marking mechanism 11 in the second direction Y. The pick-up mechanism 13 picks up the workpiece without changing the orientation of the workpiece, and the pick-up mechanism 13 transfers the workpiece to the scrap bin 14 or the flipping mechanism 15. Upon receiving the workpiece, the flipping mechanism 15 flips the workpiece to any orientation, so that the marked surface of the workpiece faces a side in the third direction Z or the marked surface of the workpiece faces a side away from code marking mechanism 11 in the second direction Y. The present disclosure imposes no specific limitation on the flipping angle of the workpiece by the flipping mechanism 15.

Since the scrap bin 14 and the flipping mechanism 15 are respectively located on two opposite sides of the feeding mechanism 10 in the second direction Y, the classification of scanning-accepted workpieces and scanning-rejected workpieces is achieved by controlling the pick-up mechanism 13 to clamp and move workpieces toward the scrap bin 14 or the flipping mechanism 15. Moreover, this can reduce interference with movement paths of the scanning-accepted workpieces and the scanning-rejected workpieces. As the flipping mechanism 15 is configured to receive the scanning-accepted workpieces picked up by the pick-up mechanism 13, the marked surface of the scanning-accepted workpieces can be flipped from one side facing the code marking mechanism 11 in the second direction Y to other orientations, thereby facilitating subsequent steps such as picking-up and movement.

In some embodiments, the flipping mechanism 15 includes a flipping bracket 151, a flipping clamp 152 rotatably disposed on the flipping bracket 151, and a flipping drive component connected to the flipping clamp 152, the flipping clamp 152 is configured to fix the scanning-accepted workpiece, and the flipping drive component is configured to drive the flipping clamp 152 to rotate relative to the flipping bracket 151 to flip the scanning-accepted workpiece.

The flipping mechanism 15 includes a flipping bracket 151, a flipping clamp 152, and a flipping drive component. The flipping clamp 152 is located on one side of the flipping bracket 151 in the third direction Z, and the flipping clamp 152 can fix the workpiece. The flipping clamp 152 can be configured with the same structure as the feeding clamp 101.

Optionally, the flipping drive component is a motor. The flipping clamp 152 is connected to the output shaft of the motor, causing the flipping clamp 152 to be driven by the motor to flip. Also optionally, the flipping drive component is a cylinder. A side of the flipping clamp 152 is hinged to the flipping bracket 151, and a cylinder is disposed between the flipping bracket 151 and the flipping clamp 152. The cylinder lifts and lowers to drive the flipping clamp 152 to flip.

Therefore, the scanning-accepted workpiece can be fixed by the flipping clamp 152 and then flipped along with the flipping clamp 152, thereby avoiding the occurrence of dropping or shifting of the scanning-accepted workpiece during the flipping process. The scanning-accepted workpiece can be automatically flipped under the action of the flipping drive component, which helps to achieve automation of operations and reduces manual labor.

In some embodiments, the pick-up mechanism 13 is located on a side of the feeding mechanism 10 in the first direction X; and the pick-up mechanism 13 includes a pick-up component 131 movable in the second direction Y and the third direction Z, the third direction Z is perpendicular to the first direction X and the second direction Y, and the pick-up component 131 is configured to pick up the scanned workpiece, transfer the scanned workpiece that is rejected to the scrap bin 14, and transfer the accepted scanned workpiece that is accepted to the flipping mechanism 15.

Since the pick-up mechanism 13 includes the pick-up component 131 movable in the second direction Y and the scrap bin 14 and the flipping mechanism 15 are respectively located on two opposite sides of the feeding mechanism 10 in the second direction Y, the pick-up mechanism 13 may transfer the scanned workpiece to the scrap bin 14 or the flipping mechanism 15, thereby achieving the classification of scanning-accepted workpieces and scanning-rejected workpieces. Since the pick-up component 131 can further move along the third direction Z, the pick-up component 131 can pull the workpiece out of the feeding clamp 101 and insert the workpiece into the scrap bin 14 and the flipping mechanism 15, thereby achieving fully automated operations and reducing manual labor.

In some embodiments, the pick-up mechanism 13 further includes a first pick-up guide rail 132 extendable in the second direction Y, a pick-up bracket 133 slidably connected to the first pick-up guide rail 132, and a second pick-up guide rail 134 extendable in the third direction Z and disposed on the pick-up bracket 133; and the pick-up component 131 includes a pick-up drive component and a pick-up gripper disposed on the pick-up drive component, and the pick-up drive component is slidably connected to the second pick-up guide rail 134 and is configured to drive the pick-up gripper to clamp or release the workpiece.

The pick-up mechanism 13 further includes the first pick-up guide rail 132, the pick-up bracket 133, and the second pick-up guide rail 134. The first pick-up guide rail 132 extends along the second direction Y and the pick-up bracket 133 is slidably connected to the first pick-up guide rail 132, so that the pick-up bracket 133 is movable in the second direction Y. The pick-up bracket 133 extends along the third direction Z. The second pick-up guide rail 134 extending along the third direction Z is disposed on the pick-up bracket 133. The pick-up component 131 is slidably connected to the second pick-up guide rail 134, allowing the pick-up component 131 to move along the third direction Z.

The pick-up component 131 includes a pick-up drive component and a pick-up gripper. The pick-up gripper is slidably connected to the second pick-up guide rail 134, enabling the pick-up gripper to move along the third direction Z. At least two pick-up grippers are provided. Two pick-up grippers can be driven by the pick-up drive component to move toward or away from each other to grip or release the workpiece. The pick-up drive component can be a structural form in which a lead screw and a motor cooperate, or a structural form in which a rack and a motor cooperate, or a cylinder. The present disclosure imposes no specific limitations on the specific form of the pick-up drive component.

Optionally, the pick-up component 131 includes a vacuum suction element capable of adsorbing or releasing the workpiece.

Since the first pick-up guide rail 132 extends along the second direction Y and the pick-up bracket 133 is slidably connected to the first pick-up guide rail 132, the pick-up bracket 133 is movable in the second direction Y. Since the pick-up bracket 133 is provided with the second pick-up guide rail 134 extending along the third direction Z and the pick-up drive component is slidably connected to the second pick-up guide rail 134, the pick-up drive component is movable in both the second direction Y and the third direction Z. Since the pick-up gripper is disposed on the pick-up drive component, the workpiece can be gripped and moved along the second direction Y and the third direction Z to another mechanism, and placed on the another mechanism.

In some embodiments, as shown in FIG. 3, FIG. 4, and FIG. 6, the code marking apparatus further includes: an unloading mechanism 16, where the unloading mechanism 16 is located on a side of the flipping mechanism 15 away from the feeding mechanism 10 in the second direction Y; and the unloading mechanism 16 includes an unloading component 161 movable in the second direction Y and the third direction Z, the third direction Z is perpendicular to the first direction and the second direction Y, and the unloading component 161 is configured to pick up the flipped workpiece and transfer the flipped workpiece to a next station.

The code marking apparatus further includes an unloading mechanism 16. The unloading mechanism 16 is located on the side of the flipping mechanism 15 away from the feeding mechanism 10 in the second direction Y, and the unloading mechanism 16 extends along the second direction Y. The unloading mechanism 16 includes an unloading component 161. The unloading component 161 is located on a side of the flipping mechanism 15 in the third direction Z. The unloading component 161 is movable in the third direction Z, allowing the unloading component 161 to move toward or away from the flipping mechanism 15. The unloading component 161 is further movable in the second direction Y, causing the unloading component 161 to drive the workpiece to move along the second direction Y to a next station. The next station can be a welding station.

Since the unloading component 161 is movable in the third direction Z, the unloading component 161 can pull the workpiece from the flipping mechanism 15, thereby freeing up space on the flipping mechanism 15 to accommodate the next workpiece, which facilitates continuous operations of code marking on workpieces. Since the unloading component 161 is movable in the second direction Y and the unloading component 161 is positioned on the side of the flipping mechanism 15 away from the feeding mechanism 10 in the second direction Y, the unloading component 161 can transfer the picked-up workpiece away from the flipping mechanism 15 until the workpiece is transferred to the next station before returning to continue with picking up to enable cyclic operations, thereby improving operational efficiency, benefiting continuous production, and saving time and effort.

In some embodiments, still referring to FIG. 3, the unloading mechanism 16 further includes a first unloading guide rail 162 extending along the second direction Y, an unloading bracket 163 slidably connected to the first unloading guide rail 162, and a second unloading guide rail 164 extending along the third direction Z and disposed on the unloading bracket 163; and the unloading component 161 includes an unloading drive component and an unloading gripper disposed on the unloading drive component, and the unloading drive component is slidably connected to the second unloading guide rail 164 and is configured to drive the unloading gripper to grip or release the flipped workpiece.

The unloading mechanism 16 further includes a first unloading guide rail 162, an unloading bracket 163, and a second unloading guide rail 164. The first unloading guide rail 162 extends along the second direction Y. The unloading bracket 163 is slidably connected to the first unloading guide rail 162, allowing the unloading bracket 163 to move along the second direction Y. The unloading bracket 163 extends along the third direction Z. The second unloading guide rail 164 extending along the third direction Z is disposed on the unloading bracket 163. The unloading component 161 is slidably connected to the second unloading guide rail 164, allowing the unloading component 161 to move along the third direction Z.

The unloading component 161 includes an unloading drive component and an unloading gripper. The unloading gripper is slidably connected to the second unloading guide rail 164, enabling the unloading gripper to move along the third direction Z. At least two unloading grippers are provided. Two unloading grippers can be driven by the unloading drive component to move toward or away from each other to grip or release the workpiece. Furthermore, the unloading gripper can be configured to rotate about an axis parallel to the third direction Z. The unloading drive component can be a structural form in which a lead screw and a motor cooperate, or a structural form in which a rack and a motor cooperate, or a cylinder. The present disclosure imposes no specific limitations on the specific form of the unloading drive component.

Optionally, the unloading component 161 includes a vacuum suction element capable of adsorbing or releasing the workpiece.

Since the first unloading guide rail 162 extends along the second direction Y and the unloading bracket 163 is slidably connected to the first unloading guide rail 162, the unloading bracket 163 is movable in the second direction Y. Since the unloading bracket 163 is provided with the second unloading guide rail 164 extending along the third direction Z and the unloading drive component is slidably connected to the second unloading guide rail 164, the unloading drive component is movable in both the second direction Y and the third direction Z. Since the unloading gripper is disposed on the unloading drive component, the workpiece can be gripped and moved along the second direction Y or the third direction Z, and is then placed at the next station.

The method for using the code marking apparatus according to the embodiments of the present disclosure is described below with reference to the accompanying drawings.

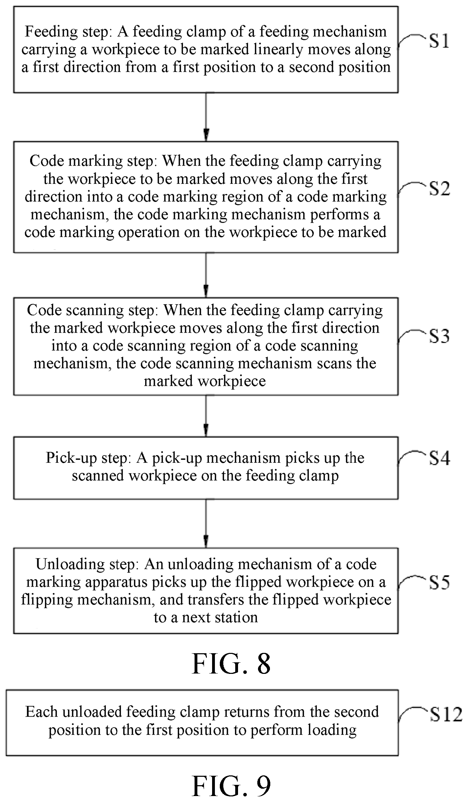

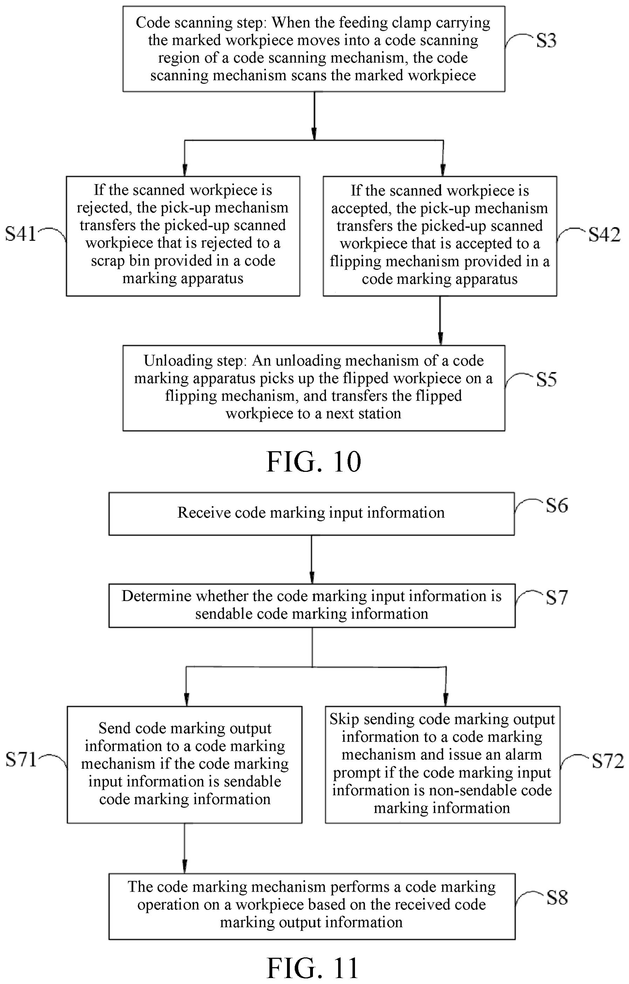

FIG. 8 is a schematic flowchart of a code marking method according to some embodiments of the present disclosure. FIG. 9 is a schematic flowchart of an example of a feeding step according to some embodiments of the present disclosure. FIG. 10 is a schematic flowchart of an example of a pick-up step according to some embodiments of the present disclosure.

According to a second aspect, as shown in FIG. 8, the present disclosure further provides a code marking method, applied to the code marking apparatus described above, and including the following steps.

S1: Feeding step: A feeding clamp of a feeding mechanism carrying a workpiece to be marked linearly moves along a first direction from a first position to a second position.

S2: Code marking step: When the feeding clamp carrying the workpiece to be marked moves along the first direction into a code marking region of a code marking mechanism, the code marking mechanism performs a code marking operation on the workpiece to be marked.

S3: Code scanning step: When the feeding clamp carrying the marked workpiece moves along the first direction into a code scanning region of a code scanning mechanism, the code scanning mechanism scans the marked workpiece.

The code marking mechanism and the code scanning mechanism are both located on a same side of the feeding mechanism in a second direction, and the second direction is perpendicular to the first direction.

S4: Pick-up step: A pick-up mechanism picks up the scanned workpiece on the feeding clamp.

In the feeding step S1, at least two feeding clamps carrying respective workpieces to be marked alternately pass through the code marking region of the code marking mechanism.

Optionally, during the movement of the feeding clamp 101 carrying the workpiece to be marked, the movement is not continuous. The feeding clamp 101 may pause for a period of time when reaching the code marking region, and continues to move after code marking is completed.

Also optionally, the feeding clamp 101 pauses for a period of time when reaching the code scanning region, and continues to move after code scanning is completed.

After reaching the second position, the feeding clamp 101 stops for a period of time to wait for the pick-up mechanism 13 to pick up the scanned workpiece.

When the feeding clamp 101 carrying the workpiece to be marked passes through the code marking region for code marking, only one feeding clamp 101 exists within the code marking region. After the feeding clamp 101 leaves the code marking region, a next feeding clamp 101 carrying a workpiece to be marked passes through the code marking region for code marking. Each time a workpiece to be marked undergoes code marking, only one workpiece to be marked can exist within the code marking region.

In this way, the workpiece to be marked is sequentially moved to the code marking region and the code scanning region by the feeding clamp 101, and code marking and code scanning of the workpiece are completed. The scanned workpiece is then picked up by the pick-up mechanism 13, so that the feeding clamp 101 can accommodate a new workpiece to be marked, thereby facilitating continuous production. The code marking method has simple steps and is time-saving and labor-saving. The code marking mechanism 11 can record only one identification code at a time, and each workpiece requires a different code. Therefore, workpieces to be marked alternately pass through the code marking region, so that the code marking mechanism 11 can mark codes on the workpieces to be marked separately, thereby avoiding repeated code marking.

In some embodiments, as shown in FIG. 9, the feeding step S1 includes the following step.

S12: Each unloaded feeding clamp returns from the second position to the first position to perform loading.

After the feeding clamp 101 reaches the second position, the pick-up mechanism 13 removes the scanned workpiece, freeing up space in the feeding clamp 101. The unloaded feeding clamp 101 moves from the second position to the first position, and stops when reaching the first position, and the feeding clamp 101 clamps a new workpiece to be marked.

After being unloaded, each feeding clamp 101 can return to the first position without stopping when passing through the code marking region and the code scanning region. Optionally, the speed at which the feeding clamp 101 returns from the second position to the first position is greater than the speed at which the feeding clamp 101 moves from the first position to the second position.

In this way, loading is performed in the first position, the code marking and the code scanning are completed in the process of moving to the second position, the workpiece in the second position is removed, and the feeding clamp 101 that becomes unloaded again returns to the first position. The steps of code marking, code scanning, and workpiece removal during loading and movement, thereby achieving continuous production and improving production efficiency.

In some embodiments, as shown in FIG. 10, the pick-up step S4 includes the following steps.

S41: If the scanned workpiece is rejected, the pick-up mechanism transfers the picked-up scanned workpiece that is rejected to a scrap bin provided in the code marking apparatus.

S42: If the scanned workpiece is accepted, the pick-up mechanism transfers the picked-up scanned workpiece that is accepted to a flipping mechanism provided in the code marking apparatus.

If the scanned workpiece is rejected, the pick-up mechanism 13 transfers the picked-up scanned workpiece that is rejected to a scrap bin 14 provided in the code marking apparatus. The scrap bin 14 is equipped with a sensor. An alert is automatically issued when the scrap bin 14 is full.

If the scanned workpiece is accepted, the pick-up mechanism 13 transfers the picked-up scanned workpiece that is accepted to a flipping mechanism 15 provided in the code marking apparatus. The flipping mechanism 15 flips the scanned workpiece.

Therefore, the pick-up mechanism 13 can classify scanning-accepted workpieces and scanning-rejected workpieces, and send scanning-accepted workpieces to the flipping mechanism 15 and scanning-rejected workpieces to the scrap bin 14, thereby facilitating subsequent separate processing.

In some embodiments, still referring to FIG. 10, the code marking method further includes the following step.

S5: Unloading step: An unloading mechanism of the code marking apparatus picks up the flipped workpiece on a flipping mechanism, and transfers the flipped workpiece to a next station.

The unloading component 161 of the unloading mechanism 16 moves along the third direction Z to the flipping mechanism 15, grips the scanned workpiece, and moves away from the flipping mechanism 15 along the third direction Z. The unloading mechanism 16 then moves the scanned workpiece along the second direction Y to the next station.

Therefore, the unloading mechanism 16 picks up the workpiece that has been flipped to a position that meets the requirements of the next station, and the unloading mechanism 16 no longer needs to flip the workpiece. After the unloading mechanism 16 picks up the workpiece, the flipping mechanism 15 frees up a position to accommodate a new workpiece, thereby facilitating production continuity.

A code marking error-proofing method provided by the present disclosure is described below with reference to the accompanying drawings. The "error-proofing" refers to preventing and correcting an erroneous action, and may include preventing and correcting code marking errors and preventing workpieces with code marking errors from entering normal processes in embodiments of the present disclosure.

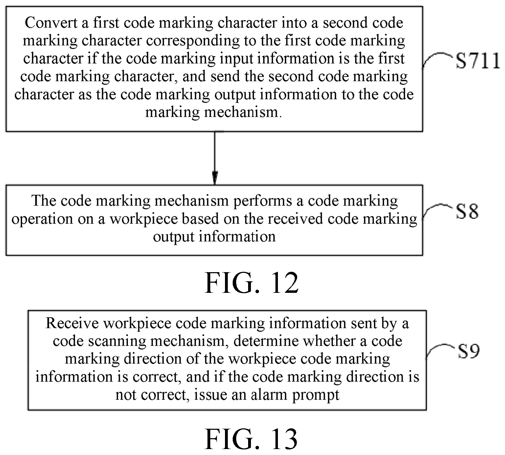

FIG. 11 is a schematic flowchart of a code marking error-proofing method according to some embodiments of the present disclosure. FIG. 12 is a schematic diagram of a code marking character error-proofing method according to some embodiments of the present disclosure. FIG. 13 is a schematic diagram of a workpiece code marking direction error-proofing method according to some embodiments of the present disclosure.

According to a third aspect, as shown in FIG. 11, the present disclosure further provides a code marking error-proofing method, including the following steps.

S6: Receive code marking input information.

S7: Determine whether the code marking input information is sendable code marking information.

S71: Send code marking output information to a code marking mechanism if the code marking input information is sendable code marking information.

S72: Skip sending code marking output information to a code marking mechanism and issue an alarm prompt if the code marking input information is non-sendable code marking information.

The sendable code marking information includes a first code marking character, the code marking output information includes a second code marking character converted from the first code marking character, and the first code marking character and the second code marking character are different and correspond to each other.

S8: The code marking mechanism performs a code marking operation on a workpiece based on the received code marking output information.

Input personnel input code marking input information into the apparatus. The apparatus receives the code marking input information and determines whether the code marking input information is sendable code marking information. If the code marking input information is sendable code marking information, the apparatus sends the code marking output information to the code marking mechanism 11. Upon receiving the code marking output information, the code marking mechanism 11 performs a code marking operation on the workpiece based on the received code marking output information. If the code marking input information is non-sendable code marking information, no code marking output information is sent to the code marking mechanism 11, and an alarm prompt is issued. The code marking input information may be input through an input apparatus such as a mouse, keyboard, and a touchscreen. In some embodiments, the apparatus includes a processing unit. The processing unit may include an information transceiver unit, a processor, and the like. The processing unit can receive, send, determine, and perform other operations on the foregoing code marking information, and can also trigger an alarm apparatus to issue an alarm. The alarm can be at least one of the following forms: sound, light, and the like.

Optionally, the code marking error-proofing method is applied to the code marking apparatus described above.

Through evaluation of the input information, only sendable code marking information is sent to the code marking mechanism 11. This reduces the probability of code marking errors caused by mistakes in manually input information, thereby minimizing losses caused by such errors. For non-sendable code marking information, the alarm prompt is issued to remind input personnel to correct the input information in time, thereby ensuring that the marking operations can start in a timely manner.

In some embodiments, as shown in FIG. 12, Step S71 includes the following step.

S711: Convert the first code marking character into the second code marking character corresponding to the first code marking character if the code marking input information is the first code marking character, and send the second code marking character as the code marking output information to the code marking mechanism.

The sendable code marking information includes a first code marking character. If the code marking input information includes the first code marking character, all first code marking characters are converted into the second code marking characters, and the code marking output information including the second code marking characters is sent to code marking mechanism 11. There is a one-to-one correspondence between the first code marking characters and the second code marking characters.

Therefore, it is determined, by determining that the code marking input information is the first code marking character, that the code marking input information is sendable code marking information, thereby reducing the risk of incorrect code marking due to an incorrect first code marking character input by the input personnel. Furthermore, through conversion into the second marked character corresponding to the first code marking character, characters in the final marked code are in a uniform format, thereby facilitating subsequent review and management.

In some embodiments, the first code marking character includes a lowercase letter, and the second code marking character includes an uppercase letter corresponding to the lowercase letter.

Therefore, lowercase letters in the code marking input information can be converted into corresponding uppercase letters, thereby ensuring that only uppercase letters appear in the code marking output information. Input personnel only need to focus on the accuracy of the content without needing to worry about the format, thereby reducing input burden of the input personnel.

In some embodiments, as shown in FIG. 13, the code marking error-proofing method further includes the following step.

S9: Receive workpiece code marking information sent by a code scanning mechanism, determine whether a code marking direction of the workpiece code marking information is correct, and if the code marking direction is not correct, issue an alarm prompt.

The apparatus receives the workpiece code marking information sent by the code scanning mechanism 12, and determines whether the code marking direction of the workpiece code marking information is correct. If the code marking direction is correct, no response is made. If the code marking direction is incorrect, the alarm prompt is issued.

Optionally, the workpiece code marking information is obtained by the first code scanning gun and the second code scanning gun. The workpiece code marking information includes first workpiece code marking information obtained by the first code scanning gun and second workpiece code marking information obtained by the second code scanning gun. If directions of the first workpiece code marking information and the second workpiece code marking information are inconsistent, the code marking direction is incorrect, the alarm prompt is issued, and a worker can check and correct the subsequent placement orientation of the workpiece.

Optionally, if directions of the first workpiece code marking information and the second workpiece code marking information are inconsistent, the code marking direction is incorrect, the alarm prompt is issued, a rejection instruction is sent to the pick-up mechanism 13. Upon receiving the rejection instruction, the pick-up mechanism 13 transfers the workpiece to the scrap bin 14.

Furthermore, if the code marking direction is incorrect, a stop instruction may be sent to the code marking mechanism 11. The code marking mechanism 11 then stops code marking upon receiving the stop instruction. Alternatively, a return instruction may be sent to the feeding mechanism 10. The feeding clamp 101 of the feeding mechanism 10 returns to the first position upon receiving the return instruction.

Therefore, the code marking direction of the code marking information is verified, thereby avoiding discrepancies in code marking directions.

In some embodiments, the method further includes: recording the code marking output information sent each time; and using the code marking output information recorded each time as the non-sendable code marking information.

Therefore, each workpiece has a unique marked code, thereby facilitating subsequent tracing and management.

The code marking apparatus includes a code marking circulation line (the feeding mechanism 10), a code marking station (the code marking mechanism 11), a code scanning station (the code scanning mechanism 12), a code marking transfer station (the pick-up mechanism 13), a top cover flipping station (the flipping mechanism 15), and a top cover loading station (the unloading mechanism 16).

The code marking circulation line (the feeding mechanism 10) is a structure that transports the top cover (workpiece) to the code marking region and the code scanning region. The code marking circulation line (the feeding mechanism 10) includes two servo traverse shafts and a top cover fixing clamp (the feeding clamp 101). The two top cover fixing clamps (the feeding clamps 101) are vertically distributed, that is, the two feeding clamps 101 are located at different positions in a third direction Z. Each top cover fixing clamp (the feeding clamp 101) includes a guide limit block. That is, each feeding clamp 101 includes a workpiece placement slot. The top cover (the workpiece) is guided in when placed. In other words, the workpiece is inserted conforming to the inner surface of the workpiece placement slot. A fouraxis robot places the workpiece onto the top cover fixing clamp (the feeding clamp 101). Each servo traverse shaft includes a linear guide rail 102 and a clamp drive component 103.

The code marking station (the code marking mechanism 11) is vertically installed in a central region of the feeding mechanism 10. A code marking machine vertically irradiates the surface that requires code marking of the top cover (workpiece). When the feeding mechanism 10 transfers the workpiece to the code marking region, the code marking machine is turned on to perform code marking. Though at different positions in the third direction Z, the two feeding clamps 101 are both located within a light emission range of the code marking machine, enabling normal code marking of the workpieces on the feeding clamps 101.

The code scanning station (the code scanning mechanism 12) is located in a backend region (a downstream side) of the code marking circulation line (the feeding mechanism 10), and is formed by two parts. That is, the two groups of code scanning guns 122 have different positions in the third direction Z. Each group of code scanning guns 122 includes a first code scanning gun and a second code scanning gun, thereby finally implementing code scanning of the workpieces on the upper and lower top cover fixing clamps (the feeding clamps 101). The identification codes on the workpiece are an incoming material cell code (the first identification code) and a marked code (the second identification code)). The two codes need to be bound.

The code marking transfer station (the pick-up mechanism 13), located above the end (the second position) of the code marking circulation line (the feeding mechanism 10), is formed by a traverse shaft (the first pick-up guide rail 132), a lifting shaft (the second pick-up guide rail 134), and a pick-up gripper. The pick-up gripper is responsible for removing the marked top cover (the workpiece) from the top cover fixing clamp (the feeding clamp 101). When the scanned workpiece is rejected, the pick-up gripper moves along the first pick-up guide rail 132 toward the side of the scrap bin 14, placing the workpiece in the scrap bin 14. When the scanned top cover is accepted, the pick-up gripper moves along the first pick-up guide rail 132 toward the next station, placing the workpiece at the next station.

The top cover flipping station (the flipping mechanism 15), located below the code marking transfer station (the pick-up mechanism 13), is formed by a clamping fixture (the flipping clamp 152) for holding the top cover (the workpiece) and a flipping cylinder (the flipping drive component). When the scanning-accepted workpiece is transferred to the top of the flipping clamp 152, the flipping clamp 152 is in a vertical state, facilitating the placement of the workpiece. After the workpiece is placed, the flipping clamp 152, under the action of the cylinder, clamps the workpiece, and then the flipping clamp 152 flips, turning the workpiece into place for unloading at the next station.

The top cover loading station (the unloading mechanism 16) includes a traverse shaft (the first unloading guide rail 162), a lifting shaft (the second unloading guide rail 164), and a rotating shaft. The unloading mechanism 16 can transfer the correctly oriented workpiece from the flipping mechanism 15 to a welding clamp station, while the rotating shaft is responsible for correcting the horizontal direction of the top cover to be the same as the direction of a welding clamp.

The scrap bin 14 is formed by a pull-out drawer 142 and a bin housing 141. Scanning-rejected workpieces can be placed into the pull-out drawer 142 in sequence. An alarm is issued when the pull-out drawer 142 is full.

The code marking error-proofing method is used for code marking letter capitalization error-proofing, code marking forbidden character error-proofing, code marking direction error-proofing, and code marking code repetition error-proofing.

The code marking letter capitalization error-proofing is primarily controlled by the code marking software. When a lowercase letter is input as a code marking character, a marked letter is always uppercase.

In the code marking forbidden character error-proofing, when some characters need to be forbidden, writing of these characters is forbidden at the back end of the code marking software, so that writing of these characters becomes impossible using a conventional method, and the code marking software issues an alarm.

In the code marking direction error-proofing, during code scanning in the code scanning phase, when it is detected that a direction is opposite, the machine issues an alarm and discharges the workpiece to the scrap bin 14.

In the code marking code repetition error-proofing, the code marking program first performs program error-proofing on a code to be marked. The code marking software verifies a barcode against a built-in LOG file of the program to ensure that the code marking program has not previously marked this barcode. The code marking machine is allowed to emit light only after verification succeeds. Upon completion of code marking, at the code scanning station, the marked code is scanned, and barcode information is written to a host computer after scanning is completed. During an unloading process of the workpiece, the barcode of the cell is verified by a MES host computer system, and error-proofing is also performed on the barcode. If the barcode has appeared in the production system before or if the naming convention of the barcode does not conform to the specifications of the machine, the workpiece is discharged to the scrap bin 14.

The above embodiments are only used to illustrate the technical solutions of the present disclosure and are not intended to limit the present disclosure. Although the present disclosure has been described in detail with reference to the foregoing embodiments, those of ordinary skills in the art should understand that, they can still make modifications to the technical solutions described in the foregoing embodiments or make equivalent substitutions to some or all of the technical features; and these modifications or substitutions do not make the essence of the corresponding technical solutions deviate from the scope of the technical solutions of the various embodiments of the present disclosure, and shall all fall within the scope of the present disclosure. Especially, as long as there is no structural conflict, the various technical features mentioned in each embodiment can be combined in any way.

## Claims

1. A code marking apparatus, comprising:
a feeding mechanism, comprising at least two feeding clamps and at least two linear guide rails that extend in a first direction and are disposed in parallel in a second direction, wherein the feeding clamps are capable of linearly reciprocating between a first position and a second position along the respective linear guide rails, and the first direction is perpendicular to the second direction;
a code marking mechanism, located between the first position and the second position in the first direction, and configured to mark a workpiece to be marked that has moved onto the feeding clamp in a code marking region of the code marking mechanism, wherein the at least two feeding clamps that are loaded with workpieces to be marked are capable of alternately passing through the code marking region of the code marking mechanism;
a code scanning mechanism, located on a downstream side of the code marking mechanism in the first direction, and configured to scan the marked workpiece on the feeding clamp that has moved into a code scanning region of the code scanning mechanism; and
a pick-up mechanism, configured to pick up the scanned workpiece on the feeding clamp, wherein
the code marking mechanism and the code scanning mechanism are both located on a same side of the feeding mechanism in the second direction.

2. The code marking apparatus according to claim 1, wherein
the feeding mechanism further comprises at least two clamp drive components, configured to drive the respective feeding clamps to move along the linear guide rails.

3. The code marking apparatus according to claim 1 or 2, wherein
each feeding clamp comprises a workpiece placement slot, positions of the workpiece placement slots of the feeding clamps in a third direction are different, and the third direction is perpendicular to the first direction and the second direction; and
the code scanning mechanism comprises a code scanning bracket and at least two groups of code scanning guns disposed on the code scanning bracket, and the groups of code scanning guns have different positions in the third direction, and are configured to respectively scan the marked workpieces in the workpiece placement slots at respective corresponding positions.

4. The code marking apparatus according to claim 3, wherein
each feeding clamp further comprises a clamp bracket and a clamping plate disposed on the clamp bracket, the clamp brackets are slidably connected to the respective linear guide rails, and the clamping plates form the workpiece placement slots.

5. The code marking apparatus according to claim 3 or 4, wherein
each group of code scanning guns comprises a first code scanning gun and a second code scanning gun arranged in the first direction, configured to respectively scan a first identification code on the marked workpiece and a second identification code marked by the code marking mechanism.

6. The code marking apparatus according to any one of claims 1 to 5, further comprising:
a scrap bin, located on a side of the code scanning mechanism away from the feeding mechanism in the second direction, and configured to receive a scanning-rejected workpiece picked up by the pick-up mechanism.

7. The code marking apparatus according to claim 6, further comprising:
a flipping mechanism, wherein the scrap bin and the flipping mechanism are respectively located on two opposite sides of the feeding mechanism in the second direction, and the flipping mechanism is configured to receive a scanning-accepted workpiece picked up by the pick-up mechanism and flip the scanning-accepted workpiece.

8. The code marking apparatus according to claim 7, wherein
the flipping mechanism comprises a flipping bracket, a flipping clamp rotatably disposed on the flipping bracket, and a flipping drive component connected to the flipping clamp, the flipping clamp is configured to fix the scanning-accepted workpiece, and the flipping drive component is configured to drive the flipping clamp to rotate relative to the flipping bracket to flip the scanning-accepted workpiece.

9. The code marking apparatus according to claim 7 or 8, wherein
the pick-up mechanism is located on a side of the feeding mechanism in the first direction; and
the pick-up mechanism comprises a pick-up component movable in the second direction and the third direction, the third direction is perpendicular to the first direction and the second direction, and the pick-up component is configured to pick up the scanned workpiece, transfer the scanned workpiece that is rejected to the scrap bin, and transfer the accepted scanned workpiece that is accepted to the flipping mechanism.

10. The code marking apparatus according to claim 9, wherein
the pick-up mechanism further comprises a first pick-up guide rail extendable in the second direction, a pick-up bracket slidably connected to the first pick-up guide rail, and a second pick-up guide rail extendable in the third direction and disposed on the pick-up bracket; and
the pick-up component comprises a pick-up drive component and a pick-up gripper disposed on the pick-up drive component, and the pick-up drive component is slidably connected to the second pick-up guide rail and is configured to drive the pick-up gripper to clamp or release the workpiece.

11. The code marking apparatus according to any one of claims 7 to 10, further comprising:
an unloading mechanism, wherein the unloading mechanism is located on a side of the flipping mechanism away from the feeding mechanism in the second direction; and
the unloading mechanism comprises an unloading component movable in the second direction and the third direction, the third direction is perpendicular to the first direction and the second direction, and the unloading component is configured to pick up the flipped workpiece and transfer the flipped workpiece to a next station.

12. The code marking apparatus according to claim 11, wherein
the unloading mechanism further comprises a first unloading guide rail extending along the second direction, an unloading bracket slidably connected to the first unloading guide rail, and a second unloading guide rail extending along the third direction and disposed on the unloading bracket; and
the unloading component comprises an unloading drive component and an unloading gripper disposed on the unloading drive component, and the unloading drive component is slidably connected to the second unloading guide rail and is configured to drive the unloading gripper to grip or release the flipped workpiece.

13. A code marking method, applied to the code marking apparatus according to any one of claims 1 to 12, and comprising:
a feeding step: linearly moving, by a feeding clamp of a feeding mechanism carrying a workpiece to be marked, along a first direction from a first position to a second position;
a code marking step: when the feeding clamp carrying the workpiece to be marked moves along the first direction into a code marking region of a code marking mechanism, performing, by the code marking mechanism, a code marking operation on the workpiece to be marked;
a code scanning step: when the feeding clamp carrying the marked workpiece moves along the first direction into a code scanning region of a code scanning mechanism, scanning, by the code scanning mechanism, the marked workpiece, wherein the code marking mechanism and the code scanning mechanism are both located on a same side of the feeding mechanism in a second direction, and the second direction is perpendicular to the first direction; and
a pick-up step: picking up, by a pick-up mechanism, the scanned workpiece on the feeding clamp, wherein
in the feeding step, at least two feeding clamps carrying respective workpieces to be marked alternately pass through the code marking region of the code marking mechanism.

14. The code marking method according to claim 13, wherein
the feeding step comprises: returning, by each unloaded feeding clamp, from the second position to the first position to perform loading.

15. The code marking method according to claim 13 or 14, wherein
the pick-up step comprises:
if the scanned workpiece is rejected, transferring, by the pick-up mechanism, the picked-up scanned workpiece that is rejected to a scrap bin provided in the code marking apparatus, or if the scanned workpiece is accepted, transferring, by the pick-up mechanism, the picked-up scanned workpiece that is accepted to a flipping mechanism provided in the code marking apparatus.

16. The code marking method according to claim 15, wherein the code marking method further comprises:
an unloading step: picking up, by an unloading mechanism of the code marking apparatus, the flipped workpiece on the flipping mechanism, and transferring the flipped workpiece to a next station.

17. A code marking error-proofing method, comprising:
receiving code marking input information;
determining whether the code marking input information is sendable code marking information, sending code marking output information to a code marking mechanism if the code marking input information is sendable code marking information, or skipping sending code marking output information to a code marking mechanism and issuing an alarm prompt if the code marking input information is non-sendable code marking information, wherein the sendable code marking information comprises a first code marking character, the code marking output information comprises a second code marking character converted from the first code marking character, and the first code marking character and the second code marking character are different and correspond to each other; and
performing, by the code marking mechanism, a code marking operation on a workpiece based on the received code marking output information.

18. The code marking error-proofing method according to claim 17, wherein
the sending code marking output information to a code marking mechanism if the code marking input information is sendable code marking information comprises:
converting the first code marking character into the second code marking character corresponding to the first code marking character if the code marking input information is the first code marking character, and sending the second code marking character as the code marking output information to the code marking mechanism.

19. The code marking error-proofing method according to claim 17 or 18, wherein
the first code marking character comprises a lowercase letter, and the second code marking character comprises an uppercase letter corresponding to the lowercase letter.

20. The code marking error-proofing method according to any one of claims 17 to 19, further comprising:
receiving workpiece code marking information sent by a code scanning mechanism, determining whether a code marking direction of the workpiece code marking information is correct, and if the code marking direction is not correct, issuing an alarm prompt.

21. The code marking error-proofing method according to any one of claims 17 to 20, further comprising:
recording the code marking output information sent each time; and
using the code marking output information recorded each time as the non-sendable code marking information.
